# DEMANDE DE BREVET EUROPEEN

(11) **EP 1 918 005 A1**
(43) Date de publication de la demande: **07.05.2008**
(21) Numéro de dépôt: 07291185.2
(22) Date de dépôt: 28.09.2007
(51) Int. Cl.: B01D 15/00, B01J 20/08, B01D 53/04, C10G 25/00

(54) **Utilisation d'alumines comme masse de captation de complexes organométalliques du silicium**

(30) Priorité: 18.10.2006 FR 0609197
(71) Demandeur: IFP, 92852 Rueil-Malmaison Cédex (FR)
(72) Inventeur: Nedez, Christophe, 30340 Salindres (FR)

(57) **Abrégé**

La présente invention concerne un procédé de captation de complexes organosiliciés en phase gazeuse ou liquide sur un solide contenant au moins 80%poids d'alumine après calcination à 1000°C. L'alumine présente un volume poreux total supérieur à 30 ml/100g, une fraction du volume poreux située dans les pores dont le diamètre est supérieur ou égal à 70 A supérieur à 10 ml/100g et une surface spécifique supérieure à 10 m²/g.

## Description

La présente invention concerne un procédé mettant en oeuvre des masses de captation de complexes organométalliques du silicium. Ces complexes peuvent se trouver dans des flux gazeux ou liquide qui passent généralement ensuite sur un catalyseur. Si ce catalyseur est non protégé, il peut dès lors s'empoisonner et voir ses performances (activité et/ou sélectivité) chuter avant terme.
La charge du procédé selon l'invention peut être une coupe essence, de préférence une coupe essence issue d'une unité de craquage, et de façon préférée une essence provenant majoritairement d'une unité de craquage catalytique. L'essence traitée peut aussi être un mélange d'essences provenant de différents procédés de conversion tels les procédés de vapocraquage, de coking ou de viscoréduction (visbreaking selon la terminologie anglo-saxonne) voire des essences directement issues de la distillation des produits pétroliers.

Le silicium joue souvent un rôle poison de premier ordre dans nombre d'applications catalytiques (hydrogénation, Prime G+, etc.). Le retour d'expériences permet de savoir qu'il ne faudrait pas parler du silicium en général mais bien de faire la part entre différentes natures de silicium :
- le silicium dit *minéral,* résulte souvent de la présence de débris de billes réfractaires. Il est présent physiquement mais ne semble pas devoir perturber l'activité ou la sélectivité du catalyseur concerné;
- le silicium habituellement appelé *organique,* en fait venant de complexes organométalliques qui peuvent réagir avec un catalyseur placé en aval et l'empoisonner de manière irréversible. L'ajout en amont d'anti-mousses, souvent à base de polysiloxanes, paraît participer de manière majeure à ce phénomène.

Nous avons montré que l'utilisation d'une alumine pouvait efficacement retenir, via une adsorption réactive, des complexes organosiliciés à sa surface. Nous avons ensuite constaté et mis en évidence que des alumines particulières pouvaient avantageusement être utilisées, affichant un potentiel de captation desdits complexes supérieur.

Dans tout le texte, les teneurs seront exprimées en % poids et ppm poids.

L'invention concerne ainsi un procédé de captation de complexes organosiliciés en phase gazeuse ou liquide sur un solide contenant au moins 80%poids d'alumine après calcination à 1000°C. Le volume poreux total (VPT) de l'alumine est supérieure à 30 ml/100g, de préférence supérieure à 45 ml/100g, de manière très préférée supérieur à 50 ml/100g, de manière encore plus préférée supérieur à 55 ml/100g.
La fraction du volume poreux située dans les pores dont le diamètre est supérieur ou égal à 70 Å (dénommé ci-après V_{70Å}) est supérieur à 10 ml/100g, de préférence supérieur à 15 ml/100g, de manière préférée supérieur à 25 ml/100g, de manière très préférée supérieur à 35 ml/100g, de manière encore plus préférée supérieur à 45 ml/100g, voire supérieur à 55 ml/100g.

L'alumine présente une surface spécifique supérieure à 10 m²/g , de préférence supérieure à 20 m²/g, de manière très préférée supérieure à 30 m²/g, voire supérieure à 50 m²/g ou même supérieure à 70 m²/g.

Des problèmes de formation de gommes, résultant d'une polymérisation parasite, peuvent parfois être observées, dans certaines conditions d'utilisation des catalyseurs, donc également de leur masse de captation de protection. C'est pourquoi, selon une version particulière de l'invention, la surface spécifique peut être inférieure à 300 m²/g, de manière préférée inférieure à 200 m²/g, de manière très préférée inférieure à 150 m²/g.

La poudre utilisée comme matière première pour la préparation de l'alumine peut être obtenue par des procédés classiques tels que le procédé par précipitation ou gel, ou par le procédé de déshydratation rapide d'un hydroxyde d'alumine tel que l'hydrargillite. L'alumine peut ensuite être soumis à une opération de séchage et éventuellement de calcination, cette dernière opération pouvant par exemple être réalisée à une température située entre 200 et 1200°C, de préférence entre 300 et 1000°C.
L'alumine peut se présenter sous toutes les formes habituelles connues par l'homme de l'art : poudre, bille, extrudé, concassé, monolithe... Les billes et les extrudés sont préférés. La taille des billes (correspondant au diamètre des billes) est alors comprise entre 0,5 et 10 mm, de préférence comprise entre 0,7 et 8 mm, encore plus préférentiellement comprise entre 0,8 et 5 mm. Les extrudés peuvent être de forme cylindrique ou polylobée, pleins ou creux. Leur taille (correspondant à leur longueur) est comprise entre 0,5 et 5 mm, préférablement entre 0,7 et 3 mm. Il convient de bien noter que par taille on entend le diamètre pour les billes et la longueur pour les extrudés. D'une manière plus générale, on appelle taille la plus grande dimension de la forme considérée.

Dans le cas d'une utilisation de billes d'alumine, elles peuvent être issues d'une mise en forme par coagulation en gouttes d'une suspension ou d'une dispersion aqueuse d'alumine ou d'une solution d'un sel basique d'aluminium se présentant sous forme d'une émulsion constituée d'une phase organique, d'une phase aqueuse et d'un agent de surface ou d'un émulsionnant.
L'alumine en billes pourra aussi être obtenue par agglomération d'une poudre d'alumine par technologie tournante telle que, par exemple, un drageoir tournant ou un tambour tournant. On pourra alors obtenir des billes de dimensions et de répartitions poreuses contrôlées, le tout étant en général généré pendant l'étape d'agglomération.
Les extrudés d'alumine pourront être obtenus par malaxage puis extrusion d'une matière à base d'alumine, ladite matière pouvant être issue de la déshydratation rapide d'hydrargillite et/ou la précipitation d'un ou de plusieurs gels d'alumine.
Suite à sa mise en forme, l'alumine peut être soumise à différentes opérations afin d'améliorer ses propriétés mécaniques, telles qu'un mûrissement par maintien dans une atmosphère à taux d'humidité contrôlée suivi d'une calcination puis, éventuellement, d'une imprégnation de l'alumine par une solution d'un ou plusieurs acides minéraux et/ou organiques, et un traitement hydrothermal en atmosphère confinée. En général, après les traitements subis, l'alumine est séchée et calcinée.

Selon un mode particulier de l'invention, l'alumine peut être dopée par un ou plusieurs élément(s) sélectionnés dans le groupe constitué par les alcalins, les alcalino-terreux et les terres rares. Alors, la teneur massique totale en ces éléments dopants est inférieure à 20%poids, de préférence inférieure à 10%poids et de manière très préférée comprise entre 500 ppm poids et 5%poids. Les dopants peuvent être ajoutés en amont, au cours et/ou suite à l'opération de mise en forme.
Dans le cas d'un dopage avec une teneur cumulée en éléments promoteurs excédant 5000 ppm poids, le volume poreux total de l'adsorbant sera supérieur à 30 ml/100g, encore préférentiellement supérieur à 35 ml/100g, pour une surface spécifique supérieure à 20 m²/g, de préférence comprise entre 30 et 300 m²/g, de manière encore plus préférée comprise entre 30 et 200 m²/g. Le V_{70Å} est supérieur à 10 ml/100g, de préférence supérieur à 15 ml/100g, de manière préférée supérieur à 25 ml/100g, de manière très préférée supérieur à 35 ml/100g, de manière encore plus préférée supérieur à 45 ml/100g, voire supérieur à 55 ml/100g.
Les dopants préférés sont le sodium, le potassium, le calcium, le magnésium et le lanthane. Le sodium et le lanthane sont choisis de manière très préférée. Le lanthane est choisi de manière très préférée.

Les exemples suivants illustrent l'invention sans toutefois en limiter la portée.

### EXEMPLE 1

La réaction est conduite en un bécher de 600 ml de volume, contenant la solution de travail, et protégé de l'atmosphère ambiante par un verre de montre entouré de paraffine. Les solides sont étudiés tels quels (donc sans concassage) et reposent, à l'intérieur du bécher, sur un trépied-nacelle, afin d'éviter toute attrition parasite avec le barreau aimanté d'agitation. Toutes les expériences sont assurées à température ambiante, sous pression atmosphérique. Le complexe organométallique est le polyméthylhydrosiloxane ((CH₃)₃SiO[(CH₃)HSiO]ₙSi(CH₃)₃) ; il est dissous dans du cyclohexane.
Les réactions sont assurées sur 6,3 g de solide, à température ambiante et sous pression atmosphérique, avec une solution de 200 ml de cyclohexane contenant 5000 ppm poids de polyméthylhydrosiloxane.
Chaque point correspond à une expérience, l'analyse étant assurée sur le solide par ICP (Inductively Coupled Plasma selon la terminologie anglo-saxonne) par la méthode des ajouts dosés.
L'ICP est réalisée de la manière suivante: une mise en solution de l'échantillon est effectuée par attaque acido-rapide avec un mélange H2SO4-H3PO4 sur plaque chauffante. La raie choisie pour la mesure en ICP est située à λ = 288,158 nm.
La méthode des ajouts consiste à faire des réplicats de l'échantillon à analyser, en ajoutant à chacun d'eux des concentrations croissantes de l'élément à doser. Une gamme de calibration croissante est obtenue, de même matrice et à volume final constant. L'analyse des échantillons permet d'établir une droite d'étalonnage. L'intersection de cette droite avec l'axe des abscisses détermine l'origine de cet axe et par conséquent la concentration de l'élément dans l'échantillon.

Le titre de la solution est parallèlement contrôlée par analyse gravimétrique : les bilans matière obtenus sont cohérents. L'attaque d'un échantillon solide testé en tube scellé, puis analysé par gravimétrie, a permis de retrouver un résultat très proche de celui donné par ICP.
L'analyse gravimétrique du silicium est opérée suite à une attaque par l'acide fluorhydrique. Par évaporation de la solution contenant un excès d'acide fluorhydrique, toute la silice peut être éliminée et la teneur en silicium est déterminée par différence.

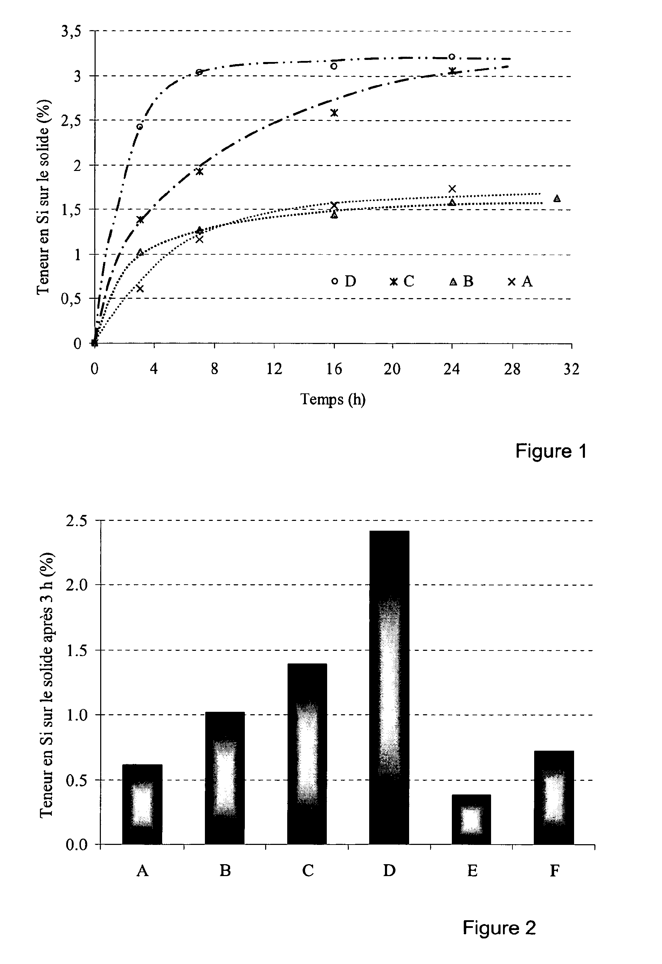

Les alumines mises en oeuvre dans cette étude sont présentées au sein du Tableau I et les résultats obtenus sont donnés par les Figures 1 et 2.

**Tableau I. Caractéristiques des alumines étudiées**

| **Alumine** | **A** | **B** | **C** | **D** | **E** | **F** |
|---|---|---|---|---|---|---|
| **Forme** | **Billes** | **Billes** | **Billes** | **Extrudés** | **Billes** | **Billes** |
| **Diamètre (mm)** | **2-5** | **2-4** | **1,8-3,15** | **1,2** | **2-5** | **2-5** |
| **Surface spécifique (m²/g)** | **332** | **73** | **189** | **275** | **321** | **341** |
| **Volume poreux total** | **39,7** | **63,9** | **66,7** | **64,2** | **43,2** | **42,7** |
| **(ml/100g)** | | | | | | |
| **V_{70Å} (ml/100g)** | **23,4** | **60,9** | **62,5** | **53,5** | **6,1** | **30,9** |

La Figure 1 correspond à la teneur en silicium (en %poids) analysée sur les solides en fonction du temps d'exposition à la solution.
La Figure 2 correspond à la teneur en silicium (en %poids) analysée sur les solides, après 3 heures de réaction.

Il apparaît sur la figure 2 que la masse de captation E (non conforme à l'invention), présentant un V_{70Å} = 6,1ml/100g, est moins efficace pour la captation du silicium que les masses de captation A à D et F (conformes à l'invention).

### EXEMPLE 2: dopage de l'alumine

Les alumines G et H résultent de l'imprégnation à sec, après mise en forme, de l'alumine A, respectivement avec de la soude et du nitrate de lanthane. Après calcination assurée à 450°C, G et H présentent des taux de Na₂O et La₂O₃ respectifs de 2,1 %poids et de 0,9%poids. Testées dans les mêmes conditions que les autres alumines (exemple 1), G et H affichent, au bout de 3 heures de réaction, respectivement 0,75%poids et 0,82%poids de silicium capté.
L'alumine I résulte de l'imprégnation à sec, après mise en forme, de l'alumine F avec de la soude. Après calcination assurée à 450°C, I présente un taux de Na₂O de 1,7%poids. Testée dans les mêmes conditions que les autres alumines jusqu'ici considérées (exemple 1), I affiche, au bout de 3 heures de réaction, 0,91 %poids de silicium de capté.

## Revendications

1. Procédé de captation en phase gazeuse ou liquide de complexes organosiliciés présents dans une coupe essence par mise en contact d'un solide avec ladite coupe essence, ledit solide contenant au moins 80% poids d'alumine après calcination à 1000°C, ladite alumine présentant un volume poreux total supérieur à 30 ml/100g, une fraction du volume poreux située dans les pores dont le diamètre est supérieur ou égal à 70 Å supérieur à 10 ml/100g et une surfacé spécifique supérieure à 10 m²/g.

2. Procédé selon la revendication 1 dans lequel l'alumine présente un volume poreux total supérieur à 45 ml/100g

3. Procédé selon l'une des revendications 1 ou 2 dans lequel l'alumine présente un volume représenté par les pores dont le diamètre est supérieur ou égal à 70 Å supérieur à 25 ml/100g.

4. Procédé selon l'une des revendications 1 à 3 dans lequel l'alumine présente une surface spécifique supérieure à 20 m²/g.

5. Procédé selon l'une des revendications 1 à 4 dans lequel l'alumine présente une surface spécifique comprise entre 70 m²/g et 200 m²/g.

6. Procédé selon l'une des revendications 1 à 5 dans lequel l'alumine présente un volume représenté par les pores dont le diamètre est supérieur ou égal à 70 Å supérieur à 45 ml/100g.

7. Procédé selon l'une des revendications 1 à 6 dans lequel l'alumine est dopée par un ou plusieurs élément(s) sélectionnés dans le groupe constitué par les alcalins, les alcalino-terreux et les terres rares, la teneur massique totale en ces éléments dopants étant inférieure à 20%poids.

8. Procédé selon la revendication 7 dans lequel l'alumine est dopée par un ou plusieurs élément(s) sélectionnés dans le groupe constitué par le sodium, le potassium, le calcium, le magnésium et le lanthane.

9. Procédé selon la revendication 8 dans lequel le dopant est le lanthane.

10. Procédé selon l'une des revendications 1 à 9 dans lequel l'alumine est sous forme de billes ou d'extrudés.

11. Procédé selon la revendication 10 dans lequel l'alumine est sous forme de billes de taille comprise entre 0,5 et 10 mm.

12. Procédé selon la revendication 10 dans lequel l'alumine est sous forme d'extrudés de taille comprise entre 0,5 et 5 mm.
